# NEUE EUROPÄISCHE PATENTSCHRIFT

(11) **EP 3 000 790 B2**
(45) Veröffentlichungstag und Bekanntmachung des Hinweises auf die Entscheidung über den Einspruch: **26.07.2023**
(45) Hinweis auf die Patenterteilung: 27.11.2019
(21) Anmeldenummer: 14186768.9
(22) Anmeldetag: 29.09.2014
(51) Int. Cl.: C03B 19/10, C03C 11/00, C03C 3/06, C03C 12/00

(54) **Verfahren für die Herstellung von Bauteilen aus synthetischem Quarzglas aus SiO2-Granulat**
Method for production of components made of synthetic quartz-glass from SiO2 granulate
Procédé de fabrication de composants en verre de silice synthétique en granulés de SiO2

(43) Veröffentlichungstag der Anmeldung: 30.03.2016
(73) Patentinhaber: Heraeus Quarzglas GmbH & Co. KG, 63450 Hanau (DE)
(72) Erfinder: Hofmann, Achim, 60599 Frankfurt (DE); Kayser, Thomas, 04105 Leipzig (DE); Otter, Matthias, 04103 Leipzig (DE); Kuehn, Bodo, 63571 Gelnhausen (DE)
(74) Vertreter: Staudt, Armin Walter

(56) Entgegenhaltungen:
- EP-A1- 0 890 555
- EP-A2- 1 076 043
- EP-B1- 0 335 875
- WO-A1-2005/054139
- WO-A1-2005/054139
- WO-A1-2013/160388
- DE-A1-102012 006 914
- DE-B3-102004 038 602
- DE-B3-102004 038 602
- DE-C1- 10 200 234
- JP-A- H10 287 416
- JP-A- 2011 207 719
- US-A- 4 042 361
- US-A1- 2010 179 269
- US-B1- 6 360 563
- US-B1- 6 380 110
- US-B1- 6 849 242

## Beschreibung

### Technischer Hintergrund

Die Erfindung betrifft ein Verfahren für die Herstellung von Bauteilen aus synthetischem Quarzglas, umfassend die Verfahrensschritte:
(a) Synthese amorpher SiO₂-Primärteilchen,
(b) Granulieren der amorphen SiO₂-Primärteilchen unter Bildung eines offenporigen SiO₂-Granulats,
(c) Sintern des offenporigen SiO₂-Granulats durch Erhitzen in einer Sinter-Atmosphäre bei einer Sinter-Temperatur und während einer Sinter-Dauer unter Bildung eines verdichteten SiO₂-Granulats,
(d) Schmelzen des verdichteten SiO₂-Granulats bei einer Schmelz-Temperatur unter Bildung des Bauteils aus synthetischen Quarzglases.

Amorphe Teilchen aus synthetischem SiO₂ werden beispielsweise durch Flammenhydrolyse oder Oxidation von Siliziumverbindungen, durch Polykondensation organischer Siliziumverbindungen nach dem so genannten Sol-Gel-Verfahren oder durch Hydrolyse und Fällung anorganischer Siliziumverbindungen in einer Flüssigkeit erhalten. Bei der industriellen Herstellung von synthetischem Quarzglas fallen derartige SiO₂-Primärteilchen auch als so genannter Soot- oder Filterstaub an.

Die SiO₂-Primärteilchen sind feinteilig. Beim Sol-Gel-Verfahren ergeben sich typische mittlere Teilchengrößen im Bereich von 0,5 µm und 5 µm, und bei der Flammenhydrolyse von weniger 0,2 µm. Sie werden unter anderem als Ausgangsmaterial für die Herstellung von Quarzglas eingesetzt. Wegen ihrer geringen Teilchengröße und der damit einhergehenden hohen spezifischen Oberfläche sind die SiO₂-Primärteilchen jedoch nicht rieselfähig, extrem sinteraktiv und sie können leicht verblasen werden, was das unmittelbare Einschmelzen zu Quarzglas erschwert. Sie werden deshalb in der Regel vorab granuliert und vorverdichtet. Beispiele für geeignete Aufbau- oder Pressgranulierungsverfahren sind Rollgranulation in einem Granulierteller, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung.

Beim Granulieren bilden sich durch Zusammenlagerungen der SiO₂-Primärteilchen diskrete, größere Agglomerate, die hier als "SiO₂-Granulatteilchen" oder kurz "Granulatteilchen" bezeichnet werden. Diese weisen eine Vielzahl offener Poren auf, die einen großen Porenraum bilden. In ihrer Gesamtheit bilden die Granulatteilchen ein "poröses" und - gleichbedeutend - "offenporiges SiO₂-Granulat".

Derartiges poröses SiO₂-Granulat ist fließfähig und zeigt ein gegenüber feinteiligem SiO₂-Staub erhöhtes Schüttgewicht, das durch thermische oder mechanische Behandlung weiter erhöht werden kann.

### Stand der Technik

Poröses SiO₂-Granulat wird unmittelbar als Füllstoff oder zur Herstellung von opakem Quarzglas eingesetzt. Ein Verfahren zur Herstellung von synthetischem opakem Quarzglas durch Erschmelzen von SiO₂-Granulat ist aus der DE 199 62 451 A1 bekannt. Ausgangsmaterial sind hier amorphe, nanoskalige, durch Flammenhydrolyse von SiCl₄ erzeugte, pyrogene SiO₂-Partikel. Daraus wird eine wässrige Dispersion hergestellt, der unter fortwährendem Rühren in einem Mischer Feuchtigkeit entzogen wird, bis sie unter Bildung einer krümeligen Masse zerfällt. Die so erzeugten Granulatteilchen sind rundlich und haben Durchmesser im Bereich zwischen 160 µm und 1000 µm und eine spezifische Oberfläche (nach BET) von 50 m²/g. Das offenporige Granulat wird in einem Durchlaufofen mit einem Durchsatz von 10 kg/h bei einer Temperatur von ca. 1200°C in chlorhaltiger Atmosphäre thermisch vorverdichtet. Infolge dieser thermischen Vorbehandlung bildet sich über das Volumen der einzelnen Granulatteilchen ein Temperaturgradient aus, der zu einer geringen Dichte im zentralen Bereich und einer hohen Dichte in einem äußeren Bereich führt. Außerdem wird das Granulat durch diese Behandlung gereinigt und von Hydroxylgruppen befreit. Die mittlere Teilchengröße des vorverdichteten SiO₂-Granulats liegt bei 420 µm und es weist eine spezifische Oberfläche (BET) µm 34 m²/g und eine Stampfdichte von 1,1 g/cm³ auf. Der Gesamtgehalt der Verunreinigungen an Li, Na, K, Mg, Ca, Fe, Cu, Cr, Mn, Ti, und Zr beträgt weniger als 200 Gew.-ppb.

Das weiterhin offenporige, synthetische SiO₂-Granulat wird zur Herstellung eines rohrförmigen Bauteils aus opakem Quarzglas eingesetzt. Dabei wird eine schicht-förmige Schüttung des Granulats an der Innenwandung einer rohrförmigen und um ihre Längsachse rotierenden Metallform mittels eines Lichtbogens von der Innenbohrung ausgehend zonenweise aufgeschmolzen. Dabei bildet sich eine nach außen, in Richtung der Metallform fortschreitende Verglasungsfront, die die Grenzfläche zwischen dem noch offenporigen Schichtbereich und einem bereits teilweise geschmolzenen Bereich bildet. Dabei schließt sich durch Sintern und Kollabieren zwar der größte Teil des Porenraums des Granulats; die eingeschlossenen Gase führen jedoch zur Bildung einer Vielzahl von Blasen im Quarzglas, an denen einfallendes Licht gestreut wird, was Opazität sowohl im sichtbaren Spektralbereich und insbesondere auch im infraroten Spektralbereich erzeugt.

Im Vergleich zur Herstellung von opakem Quarzglas erweist sich das Einschmelzen des offenporigen SiO₂-Granulats zu transparentem, synthetischem Quarzglas jedoch als problematisch. Dies liegt zum einen daran, dass beim Einschmelzen des porösen SiO₂-Granulats gasgefüllte Poren eingeschlossen und zu Blasen führen können, die aus der hochviskosen Quarzglasmasse nicht oder nur sehr langsam entfernt werden können. Zum anderen wirkt das offenporige SiO₂-Granulat stark wärmeisolierend und erschwert so ein Erhitzen der Granulat-Schüttung auf gleichmäßig hohe Temperatur. Verdeutlicht wird die hervorragende wärmeisolierende Wirkung beispielsweise dadurch, dass gepresste pyrogene SiO₂-Teilchen zur Wärmedämmung in Hochleistungsdämmplatten, wie Vakuumisolierpaneelen (VIP) eingesetzt werden.

Deshalb kann eine hinreichende Wärmeenergie zum Erschmelzen einer Schüttung von porösem SiO₂-Granulat oder eines Formkörpers aus dem Granulat von außen nur langsam und mit großem Energieaufwand zugeführt werden. Diese Problematik nimmt mit dem Volumen der Schüttung beziehungsweise des Formkörpers zu und kann zu ungleichmäßiger Temperaturverteilung beim Schmelzen und damit zu inhomogenen Eigenschaften des verglasten Bauteils führen.

Deshalb wird für anspruchsvollere Anwendungen, bei denen es auf Blasenarmut und gleichmäßige Materialeigenschaften des Endproduktes ankommt, ein vorheriges thermisches Verdichten, idealerweise bis zum vollständigen Verglasen des porösen Granulats als notwendig erachtet. Die durch vollständiges Verglasen der porösen SiO₂-Granulatteilchen erhaltenen, dichten Glasteilchen werden hier und im Folgenden auch als "Quarzglasteilchen" bezeichnet, die in ihrer Gesamtheit eine synthetische "Quarzglaskörnung" bilden. Für die Herstellung dichter Quarzglaskörnung aus porösem SiO₂-Granulat ist eine Vielzahl unterschiedlicher Techniken bekannt.

So wird in der EP 1 076 043 A2 vorgeschlagen, poröses SiO₂-Granulat in eine Brenngasflamme einzurieseln, um es darin fein zu verteilen und bei Temperaturen von 2000 bis 2500 °C zu verglasen. Das Granulat wird vorzugsweise durch Sprüh- oder Nassgranulation von Filterstaub erhalten und hat Korngrößen im Bereich von 5 bis 300 µm. Vor dem Verglasen kann es durch Behandlung mit Mikrowellenstrahlung erhitzt und vorverdichtet werden.

Der Sintergrad eines gegebenen Granulatteilchens hängt von seiner Teilchengröße und dem Wärmeeintrag ab, der wiederum von der Aufenthaltsdauer in der Brenngasflamme und der Flammentemperatur bestimmt wird. Das Granulat hat jedoch in der Regel eine gewisse Teilchengrößenverteilung, und die Brenngasflamme hat Bereiche unterschiedlicher Strömungsgeschwindigkeiten und Flammentemperaturen. Dies führt zu ungleichmäßigen und wenig reproduzierbaren Sintergraden. Es besteht außerdem die Gefahr, dass die Quarzglasteilchen durch die Brenngase verunreinigt werden. Dabei ist besonders die Beladung mit Hydroxylgruppen bei Einsatz einer wasserstoffhaltigen Brenngasflamme zu nennen, die zu einer häufig unerwünschten Verringerung der Viskosität des Quarzglases führt.

In der EP 1 088 789 A2 wird zum Verglasen von porösem SiO₂-Granulat vorgeschlagen, das Granulat zunächst durch Erhitzen in HCl-haltiger Atmosphäre in einem Drehrohrofen zu reinigen, anschließend in einem Fließbett zu kalzinieren und dann in einer vertikalen Fließbettapparatur oder in einem Tiegel unter Vakuum oder Helium oder Wasserstoff zu synthetischer Quarzglaskörnung zu verglasen.

Bei einem ähnlichen Verfahren gemäß der JP 10287416 A wird synthetisch erzeugtes, partikelförmiges SiO₂-Gel kontinuierlich einem Drehrohrofen verdichtet. Das Drehrohr ist in mehrere Temperaturzonen aufgeteilt, die den Temperaturbereich von 50 °C bis 1100 °C abdecken. Das partikelförmige SiO₂-Gel mit Partikelgrößen zwischen 100 und 500 µm wird in dem mit 8 U/min rotierenden Drehrohr durch Zufuhr eines sauerstoffhaltigen Gases zunächst von organischen Bestandteilen befreit. In einer Sinterzone, in der die Ofenatmosphäre Sauerstoff und fakultativ Argon, Stickstoff oder Helium enthält, wird es zu offenporigem SiO₂-Granulat gesintert. Das gesinterte SiO₂-Granulat enthält noch Silanolgruppen in hoher Konzentration. Um diese zu beseitigen und zur vollständigen Verdichtung wird das gesinterte aber noch offenporige Granulat abschließend bei einer höheren Temperatur von 1300 °C in einem Quarzglastiegel mit einem Innendurchmesser von 550 mm in Chargen von 130 kg kalziniert und verglast.

Die DE 10 2012 006 914 A1 beschreibt ein Verfahren zur Herstellung synthetischer Quarzglaskörnung durch Verglasen eines rieselfähigen SiO₂-Granulats, umfassend die Verfahrensschritte: Granulation pyrogen hergestellter Kieselsäure unter Bildung des SiO₂-Granulats aus porösen Granulatteilchen, Trocknen des SiO₂-Granulats, Reinigen des SiO₂-Granulats durch Erhitzen in einer halogenhaltigen Atmosphäre, Verglasen des gereinigten SiO₂-Granulats unter einem Behandlungsgas, das mindestens 30 Vol.-% Helium und/oder Wasserstoff enthält unter Bildung verglaster Quarzglaskörnung, wobei das Reinigen und Verglasen des SiO₂-Granulats jeweils in einem Drehrohrofen erfolgen, der ein Drehrohr aus einem keramischen Werkstoff aufweist.

Auch die WO 88/03914 A1 lehrt die Reduktion der BET-Oberfläche eines amorphen, porösen SiO₂-Pulvers unter Einsatz eines Drehrohrofens in Helium und/oder Wasserstoff enthaltender Atmosphäre. Es wird vorgeschlagen, SiO₂-Sootstaub mit Wasser zu vermischen, so dass eine feuchte krümelige Masse erhalten wird. Diese Masse wird in einen Drehrohrofen gegeben und bei einer Temperatur von 600 °C zu einem Pulver mit Korngrößen von 0,1 bis 3 mm verdichtet. Das so vorverdichtete SiO₂-Pulver wird anschließend in einem separaten Ofen verglast.

Aus der DE 10 2004 038 602 B3 ist ein Verfahren zur Herstellung von elektroge-schmolzenem, synthetischem Quarzglas für den Einsatz in der Lampen- und Halbleiterfertigung bekannt. Als Ausgangsmaterial für das elektrogeschmolzene Quarzglas wird thermisch verdichtetes SiO₂-Granulat eingesetzt. Das Granulat wird durch Granulation einer wässrigen Suspension aus amorphen, nanoskaligen, durch Flammenhydrolyse von SiCl₄ erzeugten pyrogenen SiO₂-Partikeln gebildet. Es werden rundliche Granulat-Körner mit Außendurchmessern im Bereich zwischen 160 µm und 1000 µm erhalten. Das Granulat wird bei ca. 400 °C im Drehrohrofen getrocknet und bei einer Temperatur von etwa 1420 °C bis auf eine BET-Oberfläche von ca. 3 m²/g verdichtet. Zum vollständigen Verglasen werden die Einzelkörner des Granulats anschließend unter verschiedenen Atmosphären, wie Helium, Wasserstoff oder Vakuum erhitzt. Das Heizprofil beim Verglasen der Granulate umfasst jeweils ein Aufheizen auf 1400 °C mit einer Aufheizrate von 5°C/min und eine Haltezeit von 120 min. Nach dieser Behandlung sind die einzelnen Granulatkörner in sich verglast. Die Körner liegen einzeln vor, ohne zu einer Masse verschmolzen zu sein.

Das Granulat wird in einem Elektroschmelzprozess zu Quarzglas weiterverarbeitet, wie beispielsweise in einem Tiegel zu einem Formkörper erschmolzen oder in einem Tiegelziehverfahren kontinuierlich zu einem Strang gezogen.

Die WO 2007/085511 A1 beschreibt ein Granulationsverfahren, bei dem feinteiliges SiO₂-Ausgangspulver mechanisch - auch unter Zusatz von Gleit- oder Bindemitteln - durch Walzenkompaktierung zu gröberen Teilchen agglomeriert und durch mechanischen Druck verdichtet wird. Das SiO₂-Ausgangspulver wird zwischen gegenläufig rotierenden, profilierten Walzen hindurchgeführt und dabei zu SiO₂-Granulat verdichtet, das in Form so genannter "Schülpen" anfällt. Diese Schülpen oder Bruchstücke davon werden bei einer Temperatur im Bereich von 400 bis 1100° in einer halogenhaltigen Atmosphäre getrocknet und im Bereich von 1200 °C bis 1700 °C zu Quarzglaskörnung dicht gesintert.

Diese Quarzglaskörnung kann mittels Flammen- oder Plasmabrennern oder in elektrisch beheizten Schmelztiegeln oder Schmelzformen direkt aufgeschmolzen und zu Bauteilen aus transparentem oder opakem synthetischem Quarzglas verarbeitet werden, wie Rohren, Stäben, Platten, Haltern, Glocken, Reaktoren, Gießrinnen, Flanschen oder Tiegeln für die Halbleiter- oder Lampenfertigung und der chemischen Verfahrenstechnik (im Folgenden wird diese Verfahrensschritt auch als "direktes Einschmelzen" bezeichnet).

Alternativ dazu wird bei einer als "indirektes Einschmelzen" zu bezeichnenden Verfahrensvariante aus der dichten Quarzglaskörnung durch keramischmechanische Formschritte zunächst ein poröser Formkörper erzeugt und der Formkörper zu dem Quarzglas-Bauteil gesintert. Ein derartiges Verfahren ist beispielsweise aus der US 4,042,361 A bekannt. Darin wird die Herstellung eines Quarzglastiegels anhand eines Schlickergießverfahren unter Einsatz synthetischer Quarzglaskörnung beschrieben. Die Quarzglaskörnung wird aus pyrogen hergestelltem SiO₂-Pulver, wie es als Filterstaub bei der Flammenhydrolyse eine Siliziumverbindung anfällt, hergestellt, indem aus dem lockeren SiO₂-Pulver zunächst durch Einmischen in Wasser und Rühren ein Gel erzeugt wird, dessen Feststoffgehalt je nach Art und Geschwindigkeit des Rührvorgangs zwischen 30 und 45 Gew.-% variiert. Die nach dem Trocknen des Gels erhaltenen Fragmente werden bei Temperaturen zwischen 1150 °C und 1500 °C zu einer dichten Quarzglaskörnung gesintert. Diese wird anschließend zu Korngrößen zwischen 1 µm bis 10 µm feingemahlen und in einen wässrigen Schlicker eingerührt. Der Schlicker wird in eine Tiegelform gegossen, und die am Rand des Tiegels haftende Schicht wird unter Ausbildung eines porösen Grünkörpers getrocknet. Der Grünkörper wird anschließend bei einer Temperatur zwischen 1800 °C und 1900 °C zu dem Quarzglastiegel verglast.

Die WO 2005/054139 A1 beschreibt die Herstellung von Bauteilen aus laseraktivem Quarzglas unter Einsatz eines thermisch verdichteten Zwischenprodukts, das die Gefahr einer Blasenbildung verringert. Dafür werden zwei Ausführungsbeispiele angegeben. Laut Beispiel 1 wird das Granulat bei einer Temperatur von circa 1100°C in chlorhaltiger Atmosphäre leicht vorverdichtet und hat dann eine BET-Oberfläche von 34 m²/g. Im Beispiel 2 wird das Granulat bei einer Temperatur von circa 1250°C in chlorhaltiger Atmosphäre leicht vorverdichtet und danach kurz auf 1450°C dichtgesintert.

Die EP 0 890 555 A1 beschreibt die Herstellung von transparenten Quarzglaskörpern aus homogenen und dichten Granulaten (Spalte 2, Zeilen 12-24). Es wird erwähnt, dass Granulate, die bei einer thermischen Behandlung bei Temperaturen unterhalb 1200°C noch nicht dicht gesintert sind, für das Schmelzen blasenarmer Quarzglaskörper geeignet sind.

### Technische Aufgabenstellung

Das Vorab-Verglasen des offenporigen SiO₂-Granulats zu möglichst blasenfreier, dichter Quarzglaskörnung ist grundsätzlich ein geeigneter Zwischenschritt zum Einschmelzen des Granulats zu blasenarmem, transparentem Quarzglas. Jedoch ist dafür ein separater Verglasungsprozess mit Temperaturen oberhalb der Erweichungstemperatur von Quarzglas, also oberhalb von 1150 °C, typischerweise um 1400 °C, in Kauf zu nehmen.

Unabhängig davon ist es nicht trivial und es gelingt auch nicht ohne weiteres, blasenfreie Quarzglaskörnung aus porösem SiO₂-Granulat zu erzeugen. Die besten Ergebnisse werden beim Verglasen unter Vakuum oder unter Helium oder Wasserstoff als Sinterhilfsmittel zur Verbesserung der Wärmeübertragung oder zur Blasenminimierung erreicht. Dies erhöht jedoch nicht nur die Verbrauchskostenkosten zusätzlich, sondern auch das Sicherheitsrisiko (bei Wasserstoff wegen der Explosionsgefahr bei Reaktion mit Sauerstoff). Dieser Verglasungsprozess ist langwierig und mit einem hohen Energieverbrauch verbunden.

Aber selbst das direkte oder indirekte Einschmelzen oder das Sintern eines Formkörpers aus vollständig dichter Quarzglaskörnung beseitigt nicht ohne weiteres das Problem der Blasenbildung im resultierenden Quarzglas. Denn der Raum zwischen den dichten Quarzglasteilchen kann Gase enthalten, die beim Einschmelzprozess innerhalb der viskosen Quarzglasschmelze eingeschlossen werden und die nachträglich kaum noch entweichen und auch nicht durch Homogenisierungsmaßnahmen entfernt werden können. Sie verursachen Blasen und andere Störungen im Quarzglas.

Daher sind Entgasungs-Maßnahmen zur Vermeidung von Blasen nicht nur beim Verglasen des porösen SiO₂-Granulats zu dichter Quarzglaskörnung, sondern auch im direkten oder indirekten Einschmelzprozess unumgänglich, wenn Ziel ein blasenarmes, transparentes Quarzglas ist. Geeignete Maßnahmen sind hier wiederum das Einschmelzen beziehungsweise das Sintern der Quarzglaskörnung unter Vakuum oder in einer Atmosphäre aus Helium oder Wasserstoff, jedoch mit dem oben erläuterten Aufwand an Zeit, Energie und Material.

Der Erfindung liegt die Aufgabe zugrunde, ein Verfahren anzugeben, das ausgehend von offenporigem SiO₂-Granulat eine kostengünstige Herstellung blasenarmer, transparenter Bauteile aus Quarzglas ermöglicht.

### Allgemeine Beschreibung der Erfindung

Diese Aufgabe wird ausgehend von einem Verfahren der eingangs genannten Gattung zur Herstellung von Bauteilen aus transparentem Quarzglas erfindungsgemäß durch ein Verfahren gelöst, bei dem Sinter-Atmosphäre, Sinter-Temperatur und Sinter-Dauer beim Sintern gemäß Verfahrensschritt (c) so eingestellt werden, dass das verdichtete SiO₂-Granulat eine Schüttdichte im Bereich von 0,9 kg/l bis 1,3 kg/l und eine spezifische BET-Oberfläche im Bereich von 1 m²/g bis 25 m²/g aufweist - beides jeweils gemessen anhand einer in der Beschreibung definierten Messmethode -, und dass es einerseits offenporig bleibt und andererseits bei einer Wellenlänge von 1700 nm eine materialspezifische Infrarot-Transmission T₁₇₀₀ - gemessen anhand einer in der Beschreibung definierten Messmethode - zeigt, die im Bereich von 50 bis 95% der Infrarot-Transmission T₁₇₀₀ einer Quarzglaskörnung desselben Materials liegt.

Bei der Verarbeitung von anfänglich porösem SiO₂-Granulat zu transparentem Quarzglas kann zwischen Heißbehandlungsschritten unterschieden werden, die hinsichtlich Zeit-, Energie- und Materialaufwand weniger aufwändig sind und solchen, bei denen aufwändige Maßnahmen zur Erzielung der gewünschten Blasenfreiheit getroffen werden müssen, wie beispielsweise Evakuierungsmaßnahmen bei hoher Temperatur. Das erfindungsgemäße Verfahren zielt darauf ab, den Anteil der aufwändigen Heißbehandlungsschritte zu Gunsten der weniger aufwändigen zu reduzieren. Um dies zu erreichen, sind folgende Maßnahmen vorgesehen:
- Die zum Erzeugen von hochwertigem transparentem Quarzglas übliche Vorab-Herstellung voll verglaster Quarzglaskörnung wird vermieden. Damit entfällt auch der mit diesem Zwischenschritt verbundene Zeit-, Energie- und Materialaufwand. Stattdessen wird für den Schmelzprozess ein weniger aufwändig zu erzeugendes, noch poröses SiO₂-Granulat bereitgestellt.
- Üblicherweise kann jedoch poröses Granulat in einem Schmelzprozess nicht mit wirtschaftlich vertretbarer Schmelzdauer und Schmelztemperatur zu transparentem Quarzglas verarbeitet werden. Insoweit ist der Einsatz von porösem Granulat zum Einschmelzen zu transparentem Quarzglas technologisch zwar denkbar, aber nur beschränkt nutzbar. Es hat sich jedoch überraschend gezeigt, dass diese Beschränkung aufgehoben werden kann, wenn das einzusetzende poröse Granulat eine spezifische Transparenz im infraroten Wellenlängenbereich zeigt. Die Infrarot (IR)-Transparenz darf dabei nicht zu niedrig sein aber auch nicht zu hoch. Derartiges Granulat wird im Folgenden auch als "IR-Transparenz optimiertes SiO₂-Granulat" bezeichnet. Es kann mit vergleichsweise geringem Zeit-, Energie- und Materialaufwand zu hochwertigem Quarzglas geschmolzen werden. Dieser Aspekt des erfindungsgemäßen Verfahrens wird im Folgenden näher erläutert.

Zur Lösung der Blasenproblematik im Schmelzprozess müssen Entgasungs-Maßnahmen ergriffen werden, unabhängig davon, ob dabei verglaste, dichte Quarzglaskörnung oder ein noch offenporiges SiO₂-Granulat eingesetzt wird. Bekannte Entgasungsmaßnahmen bestehen im Anlegen von Unterdruck und im Austausch von innerhalb einer Teilchenschüttung vorhandener Gase durch Helium oder Wasserstoff. Der Einsatz von noch offenporigem Granulats in dieser Hinsicht vorteilhaft, weil es diesen Entgasungs-Maßnahmen im Schmelzprozess noch zugänglich ist in dem Sinne, dass im Granulat vorhandene Gase beseitigt und dem Einschluss von Gasen entgegengewirkt werden kann.

Die mit dem Einsatz des noch porösen Granulats verbundene Problematik betreffend der Wärmedämmung und der Zufuhr der zum Erschmelzen erforderlichen Wärmeenergie wird erfindungsgemäß durch ein auf IR-Transparenz optimiertes SiO₂-Granulat entschärft. Dieses weist eine spezifische Transparenz für IR-Strahlung im Wellenlängenbereich von etwa 500 nm bis etwa 2400 nm auf. Innerhalb dieses Wellenlängenbereichs zeigen sich Absorptionsbanden, die in der Regel auf Hydroxylgruppen oder Wasser zurückzuführen sind und die bei dieser Betrachtung nicht berücksichtigt werden. Als repräsentativ für die IR-Transparenz des Granulats wird die Transmission bei der Wellenlänge von 1700 nm herangezogen, die von Absorptionen durch Hydroxylgruppen und Wasser im Wesentlichen unbeeinflusst ist.

Infolge ihrer Transparenz für IR-Strahlung wird die Streuwirkung der Granulatteilchen für diese Strahlung verringert und dadurch die Zufuhr der Wärmeenergie zum Aufschmelzen der SiO₂-Granulatteilchen erleichtert. Dadurch ist es möglich, bei Einsatz eines auf IR-Transparenz optimierten SiO₂-Granulats die Einschmelzdauer und/oder die Einschmelztemperatur im Vergleich zu einem nicht optimierten Granulat nennenswert zu verringern.

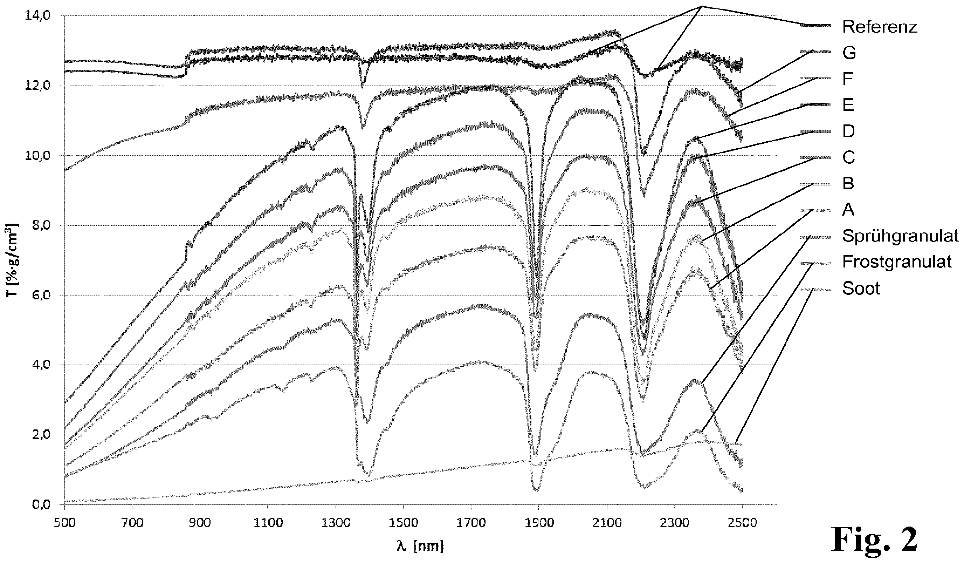

Im Folgenden wird eine geeignete Messmethode zur Ermittlung der IR-Transmission erläutert. Die IR-Transmission einer Schüttung der Granulatteilchen oder eines Formkörpers aus den Granulatteilchen hängt vom Grad der thermischen Verdichtung des SiO₂-Granulats ab. Die Transmissionskurven von Figur 2 zeigen, dass die IR-Transmission bei der Wellenlänge von 1700 nm mit der thermischen Verdichtung des SiO₂-Granulats zunimmt und kurz vor der vollständigen Verdichtung ein Maximum erreicht. Das vollständig verdichtete SiO₂-Granulat - also Quarzglaskörnung - kann demgegenüber wieder eine etwas geringere IR-Transmission zeigen, was auf verstärkte Reflektion an der spiegelnd verglasten Oberfläche zurückgeführt werden kann. Die IR-Transmission der vollständig verglasten, blasenfreien und transparenten Quarzglaskörnung stellt einen geeigneten "Referenzwert" für die IR-Transmission der SiO₂-Granulatteilchen dar. Die als Referenzmaterial dienende Quarzglaskörnung und die SiO₂-Granulatteilchen bestehen dabei aus chemisch gleichem SiO₂-Material. Im einfachsten Fall wird die Referenz-Quarzglaskörnung durch vollständiges Verglasen desjenigen Granulats erzeugt, dessen IR-Transmission zu ermitteln ist.

Die Messung der IR-Transmission erfolgt beispielsweise unter Einsatz einer Ulbrichtkugel an einer 4,2 mm dicken Schüttung des SiO₂-Granulats in einer Messküvette. Über die Messlänge von 4,2 mm erzeugt hochporöses Granulat eine geringere SiO₂-Massenbelegung als niedrigporöses Granulat. Zwecks Vergleichbarkeit der Messwerte trotz dieser unterschiedlichen Granulatdichten, werden sie auf die Schüttdichte des jeweiligen Granulats normiert. Die Normierung besteht darin, dass der mittels Ulbrichtkugel ermittelte Transmissions-Messwert (in %) mit der spezifischen Schüttdichte des SiO₂-Granulats (in g/cm³) multipliziert wird. Der so ermittelte Transmissionswert T bei der Messwellenlänge von 1700 nm wird hier als "T₁₇₀₀" bezeichnet.

Wie oben beschrieben (und aus Figur 2 ersichtlich), kann die IR-Transmission (insbesondere der erwähnte T₁₇₀₀-Wert) einer Schüttung von SiO₂-Granulatteilchen sogar höher sein als der an der vollständig verglasten Quarzglaskörnung gemessene Referenzwert. Granulatteilchen mit einer derartig hohen IR-Transmission (mehr als 95% vom Referenzwert) zeigen jedoch das günstige Einschmelzverhalten des auf IR-Transmission optimierten Granulats überraschend nicht. Möglicherweise ist die sehr hohe IR-Transparenz ein Zeichen dafür, dass die Granulatteilchen nahezu vollständig dicht sind und keine offene Porosität mehr zeigen. Die geschlossenen Restporen derartiger Granulatteilchen sind Entgasungsmaßnahmen beim Einschmelzprozess nicht mehr zugänglich.

Die Erfindung sieht daher vor, dass zum Schmelzen gemäß Verfahrensschritt (d) zwar ein möglichst dichtes, aber immer noch offenporiges SiO₂-Granulat eingesetzt wird, dessen Porosität vorzugsweise mindestens 10 % beträgt. Unter der Randbedingung der Beibehaltung der Offenporigkeit wird das SiO₂-Granulat mechanisch und/oder thermisch soweit verdichtet, dass es eine möglichst hohe IR-Transparenz aufweist. Es hat sich gezeigt, dass der geeignete Verdichtungsgrad mit einer IR-Transmission einhergeht, die im Bereich von 50 bis 95% des Referenzwertes bei der Wellenlänge von 1700 nm liegt, bevorzugt im Bereich von 60 bis 90%.

Die nach dem mechanischen und/oder thermischen Verdichten verbleibende Porosität des SiO₂-Granulats hängt von den verdichtungsrelevanten Eigenschaften der SiO₂-Primärteilchen ab, vom jeweiligen Granulationsprozess und der daraus resultierenden Morphologie, Porosität und Größenverteilung der Granulatteilchen und von der Art und Intensität des Verdichtungsvorgangs selbst. Dies wird im Folgenden noch näher erläutert.

Eine typische Transmissionskurve eines noch offenporigen SiO₂-Granulats zeigt im Wellenlängenbereich zwischen 500 und 1300 nm einen Anstieg der Transmission. Dieser deutlich wellenlängenabhängige Transmissionsverlauf kann auf Streuung an Strukturen im Submikrometerbereich zurückgeführt werden; er hängt offensichtlich von der Porosität des SiO₂-Granulats ab; bei hoch verdichtetem Granulat ist der Anstieg gering oder er entfällt sogar vollständig. Ein Maß für diesen Anstieg ist der Unterschied der bei den Wellenlängen 500 nm und 1700 nm gemessenen Infrarot-Transmissionswerte T₅₀₀ beziehungsweise T₁₇₀₀. Ein geringer Unterschied weist auf eine hohe Verdichtung des Granulats hin. Empirisch wurde gefunden, dass in Fällen, bei denen das Verhältnis T₅₀₀/T₁₇₀₀ mehr als 0,8 beträgt, anscheinend eine so hohe Verdichtung des Granulats erreicht ist, dass sich geschlossene Poren ausbilden, die die Einschmelzbarkeit erschweren.

Daher hat es sich als vorteilhaft erwiesen, wenn Sinter-Atmosphäre, Sinter-Temperatur und Sinter-Dauer beim Sintern gemäß Verfahrensschritt (c) so eingestellt werden, dass das verdichtete SiO₂-Granulat bei einer Wellenlänge von 500 nm eine materialspezifische Infrarot-Transmission T₅₀₀ zeigt, und dass das Verhältnis T₅₀₀/T₁₇₀₀ 0,8 oder weniger beträgt.

Das Verhältnis T₅₀₀/T₁₇₀₀ von 0,8 markiert in etwa den Übergang zwischen noch offenporigem und zu hoch verdichtetem, geschlossenporigem SiO₂-Granulat.

Es wird eine Verfahrensweise bevorzugt, bei der das Schmelzen gemäß Verfahrensschritt (d) ein Erhitzen einer Schüttung des SiO₂-Granulats oder eines Presslings aus dem SiO₂-Granulat unter Unterdruck bei der Schmelz-Temperatur umfasst.

Eine vorteilhafte Eigenschaft des auf IR-Transparenz optimierten SiO₂-Granulats besteht darin, dass es eine vergleichsweise geringe Streuung für Infrarotstrahlung erzeugt und daher leichter einschmelzbar ist als nicht auf IR-Transparenz optimiertes SiO₂-Granulat. Ein weiterer Vorteil liegt darin, dass es eine Mindestdichte hat, die durch den unteren Grenzwert von T₁₇₀₀ vorgegeben ist. Auch diese Eigenschaft trägt zur leichteren Einschmelzbarkeit des Granulats bei. Dadurch kann bei Einsatz dieses SiO₂-Granulats der energie- und zeitaufwändige Heißbehandlungsschritt mit zusätzlicher Entgasungsmaßnahme - nämlich dem Anlegen von Unterdruck oder Vakuum (< 2 mbar) - beim erfindungsgemäßen Verfahren ähnlich kurz ausfallen wie beim Einschmelzen vollständig verglaster Quarzglaskörnung und jedenfalls nennenswert kürzer als bei Einsatz eines herkömmlichen SiO₂-Granulats. Dies trifft auch zu, wenn das Granulat vor dem Einschmelzprozess beispielsweise durch kaltisostatisch-uniaxiales Pressen, oder während des Einschmelzprozesses ergänzend zum Einsatz von Unterdruck (Vakuum) beispielsweise durch heißisostatisches Pressen einem mechanischen Druck ausgesetzt wird.

In dem Zusammenhang hat es sich auch bewährt, wenn das verdichtete SiO₂-Granulat eine Schüttdichte im Bereich von 0,9 kg/l bis 1,3 kg/l und bevorzugt von mindestens 1,1 kg/l aufweist.

Infolge der vergleichsweise hohen Schüttdichte sind die SiO₂-Granulatteilchen leicht einschmelzbar.

Bei der Erfindung kommt es auf die offene Porosität der einzelnen SiO₂-Granulatteilchen an, nicht auf die Porosität der Granulat-Schüttung. Offene Porosität eines Materials zeigt sich grundsätzlich darin, dass es für Gase durchlässig und damit gegenüber Flüssigkeiten saugfähig ist, was anhand eines Farbeindringtests nachweisbar ist. Als Maß für offene Porosität der einzelnen SiO₂-Granulatteilchen wird bei der Erfindung das Verhältnis T₅₀₀/T₁₇₀₀ herangezogen, das bei offener Porosität 0,8 oder weniger beträgt.

Die mittels BET-Methode ermittelte spezifische BET-Oberfläche liegt im Bereich von 1 m²/g bis 25 m²/g, vorzugsweise im Bereich von 3 m²/g bis 20 m²/g.

Eine BET-Oberfläche von mehr als 20 m²/g erschwert das schnelle Einschmelzen des Granulats.

Das Sintern erfolgt im einfachsten Fall in einer Atmosphäre aus Luft oder Inertgas. Es hat sich jedoch besonders bewährt, wenn die Sinter-Atmosphäre chlorhaltig ist, und die Sinter-Temperatur mindestens 1000 °C, vorzugsweise mindestens 1100 °C beträgt.

Die chlorhaltige Sinter-Atmosphäre enthält beispielsweise HCl oder Cl₂. Diese Behandlung bewirkt insbesondere eine Reduzierung an Alkali- und Eisenverunreinigungen aus dem SiO₂-Granulat sowie eine Beseitigung von Hydroxylgruppen. Bei Temperaturen unterhalb von 1000 °C ergeben sich lange Behandlungsdauern und bei Temperaturen oberhalb von 1100 °C besteht die Gefahr des Dichtsinterns des porösen Granulats unter Einschluss von Chlor oder gasförmigen Chlorverbindungen.

Im verdichteten SiO₂-Granulat stellt sich nach der Dehydratationsbehandlung ein geringer Hydroxylgruppengehalt ein. Der Chlorgehalt kann durch eine Nachbehandlung unter sauerstoffhaltiger Atmosphäre gesenkt werden Niedrige Konzentrationen an Hydroxylgruppen und Chlor erleichtern das blasenfreie Einschmelzen der Granulatteilchen.

Die Sinterbehandlung des SiO₂-Granulats erfolgt vorzugsweise in loser Schüttung, also in einem lockeren, fließfähigen Zustand. Im Hinblick auf die Vermeidung von Agglomerat-Bildungen zwischen den Granulatteilchen hat es sich als günstig erweisen, wenn das Sintern gemäß Verfahrensschritt (c) in einem Drehrohrofen erfolgt.

Außerdem wird eine Verfahrensvariante bevorzugt, bei der das Granulieren gemäß Verfahrensschritt (b) durch Frostgranulation erfolgt und Granulatteilchen mit plättchenförmiger Morphologie erzeugt werden.

Bei der Frostgranulation wird eine Dispersion der SiO₂-Primärteilchen tiefgefroren und anschließend gefriergetrocknet, wobei im Hochvakuum die gefrorene Flüssigkeit durch Sublimation verdampft. Auf diese Weise wird ein porenarmes SiO₂-Granulat erhalten.

Bei einer anderen, ebenfalls geeigneten Verfahrensweise erfolgt das Granulieren gemäß Verfahrensschritt (b) durch Sprühgranulation, wobei Granulatteilchen mit sphärischer Morphologie erzeugt werden.

Bei der Granulation von SiO₂-Primärteilchen fällt in der Regel ein nicht gewünschter Feinanteil mit nicht oder unzureichend agglomeriertem Granulat an, der beim anschließenden Sintern oder Einschmelzen des Granulats Probleme erzeugt. Bei der Sprühgranulation ist die vorgegebene Größe der Granulatteilchen relativ genau einstellbar und der Feinanteil relativ gering. Herstellungsbeding haben Sprühgranulatteilchen eine Morphologie, die die Fließfähigkeit des Granulats begünstigt. Dies erleichtert die Sinterbehandlung des SiO₂-Granulats in loser Schüttung.

Es hat sich gezeigt, dass die IR-Transmission von SiO₂-Granulat von der Teilchengröße der Granulatteilchen abhängt. Bei mittleren Teilchengrößen von mehr als 100 µm (D₅₀-Wert) ist die IR-Transmission umso größer, je größer die mittlere Teilchengröße ist.

Daher wird beim Granulieren gemäß Verfahrensschritt (b) bevorzugt offenporiges SiO₂-Granulat aus Granulatteilchen erzeugt, die eine mittlere Teilchengrö-ße von mindestens 150 µm, bevorzugt mindestens 200 µm aufweisen. Das durch Granulieren gemäß Verfahrensschritt (b) erhaltene offenporige SiO₂-Granulat hat vorzugsweise eine BET-Oberfläche im Bereich von 20 m²/g bis 100 m²/g.

Teilchengröße und die Teilchengrößenverteilung der Granulatteilchen werden anhand des D₅₀-Wertes einer Teilchengrößen-Verteilungskurve (kumulatives Volumen der SiO₂-Granulatteilchen in Abhängigkeit von der Teilchengröße) charakterisiert. Der D₅₀-Wert kennzeichnet eine Partikelgröße, die von 50% des kumulativen Volumens der SiO₂-Granulatteilchen nicht erreicht wird. Die Teilchengrößenverteilung wird durch Streulicht- und Laserbeugungsspektroskopie nach ISO 13320 ermittelt. Die mittlere Teilchengröße wird am einfachsten mittels Siebanalyse nach DIN 66165-2 ermittelt. Mit "mittlerer Teilchengröße" ist hier jeweils der D₅₀-Wert des Granulats gemeint.

Für ein möglichst homogenes Einschmelzen der Granulatteilchen sind etwa gleiche Teilchengrößen vorteilhaft. Im Hinblick hierauf hat es sich auch bewährt, wenn die Granulatteilchen eine enge Teilchengrößenverteilung aufweisen, wobei die dem D₉₀-Wert zugeordnete Teilchengröße maximal dreifach so groß ist wie die dem D₁₀-Wert zugeordnete Teilchengröße.

Beim Granulieren gemäß Verfahrensschritt (b) werden vorzugsweise pyrogen erzeugte SiO₂-Primärteilchen eingesetzt.

Diese SiO₂-Primärteilchen werden durch Oxidation oder durch Flammenhydrolyse eines Silizium enthaltenden Einsatzmaterials hergestellt, besonders bevorzugt eines chlorfreien siliziumhaltigen Einsatzmaterials. Derartige SiO₂-Primärteilchen zeichnen sich durch besonders hohe Reinheit und Sinteraktivität aus, so dass ihre Granulation mittels bekannter Granulierverfahren ohne Zusatz von Bindemittel erfolgen kann.

Ein bewährtes Einsatzmaterial für die Herstellung von synthetischem Quarzglas ist Siliciumtetrachlorid (SiCl₄). Diese Substanz ist durch Flammenhydrolyse in Gegenwart von Wasserstoff und Sauerstoff beziehungsweise durch Pyrolyse in Gegenwart von Sauerstoff zu SiO₂ umsetzbar. Damit geht jedoch der Nachteil einher, dass sich bei der Umsetzung Chlor oder Chlorverbindungen bilden, die wegen ihrer Korrosivität den Einsatz von ungeschützten metallischen Bauteilen erschweren. Um diesen Nachteil zu vermeiden, wird daher der Einsatz einer anderen siliziumorganischen Verbindungen vorgeschlagen, aus der durch Hydrolyse oder durch Oxidation SiO₂ gebildet werden kann. Als Beispiel seien Polyalkylsiloxane genannt.

### Ausführungsbeispiel

Nachfolgend wird die Erfindung anhand von Ausführungsbeispielen und einer Zeichnung näher erläutert. Dabei zeigen im Einzelnen:

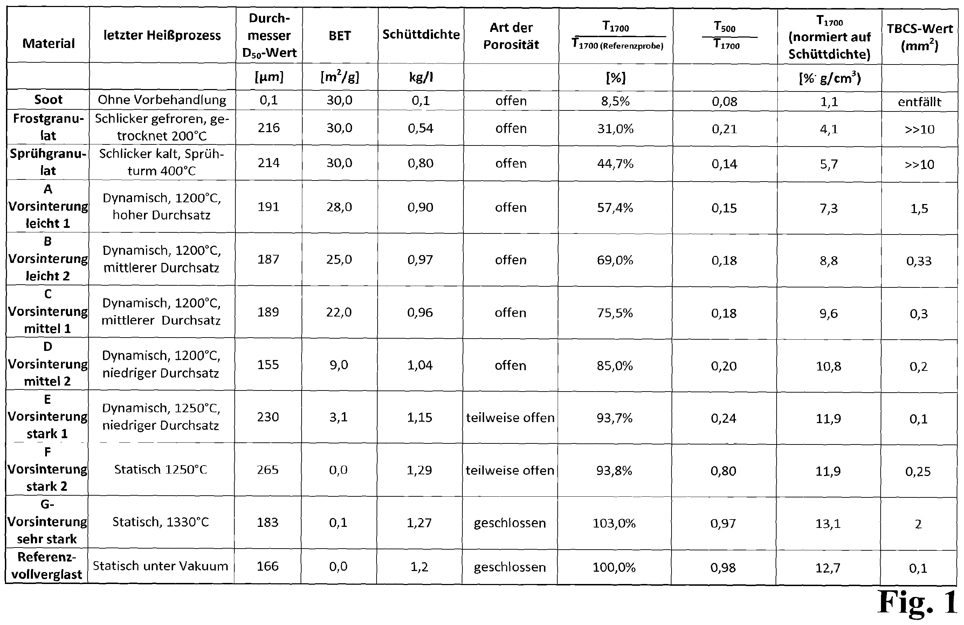

- **Figur 1**: eine Tabelle mit Parametern des Herstellungsprozesses und Eigenschaften verschiedener Granulate,
- **Figur 2**: ein Diagramm mit Infrarot-Transmissionsspektren der Granulate
- **Figur 3**: Diagramme zu Blasen-Häufigkeitsverteilungen in unterschiedlichen Proben.

### Synthese von SiO₂-Primärteilchen

SiO₂-Primärteilchen fallen als sogenannter "Soot" bei der Herstellung von synthetischem Quarzglas an. Die Sootabscheidung erfolgt unter Einsatz von Flammhydrolysebrennern, die in einer gemeinsamen Brennerreihe entlang eines rotierenden Trägerrohres reversierend hin- und herbewegt werde. Den Flammhydrolysebrennern werden jeweils als Brennergase Sauerstoff und Wasserstoff zugeführt sowie als Einsatzmaterial für die Bildung der SiO₂-Partikel ein SiO₂-Einsatzdampf, der ein Gemisch aus verdampften Polyalkylsiloxanen, umfassend Hexamethylcyclotrisiloxan (D3), Octamethylcyclotetrasiloxan (D4) und Dekamethylcyclopentasiloxan (D5) enthält. D4 ist die Hauptkomponente des Polyalkylsiloxan-Einsatzmaterials mit einem Anteil von 98 Gew.-%.

Die dabei erzeugten SiO₂-Sootpartikel selbst liegen in Form von Agglomeraten oder Aggregaten der SiO₂-Primärteilchen mit Partikelgrößen im Nanometerbereich vor. Die SiO₂-Sootpartikel werden auf der Zylindermantelfläche des um seine Längsachse rotierenden Trägerrohrs abgeschieden, so dass schichtweise ein Sootkörper aufgebaut wird.

Ein Teil der SiO₂-Sootpartikel gelangt über eine Absaugung in eine Filteranlage und fällt als sogenannter "Sootstaub" oder "Filterstaub" an.

Dieses pyrogen erzeugte, hochreine SiO₂-Sootmaterial liegt in einer Partikelgröße von weniger als 100 nm vor und hat typischerweise eine spezifische Oberfläche (nach BET) von etwa 30 m²/g und eine Schüttdichte von etwa 0,1 kg/l. Es wird für die Herstellung von SiO₂-Granulat eingesetzt.

### Herstellung von SiO₂-Sprühgranulat

Es wird ein SiO₂-Schlicker hergestellt, indem das hochreine, pyrogene erzeugte SiO₂-Sootmaterial in deionisiertem Wasser dispergiert wird. Die Dispersion wird dabei auf ein Litergewicht von 1380 g/l eingestellt. Die Schlickerviskosität beträgt 450 mPas.

Unter Einsatz eines handelsüblichen Sprühtrockners wird der Schlicker bei einer Heißlufttemperatur von 400 °C und einem Schlickerdruck von 10,5 bar versprüht.

Dabei wird ein Sprühgranulat mit einem mittleren Korndurchmesser von 214 µm erhalten. Der Feinanteil mit einem Durchmesser unterhalb von 100 µm wird herstellungsbedingt bereits bei der Sprühgranulation mittels eines Zyklons abgetrennt. Jedes Granulatteilchen liegt als Agglomerat einzelner sphärischer SiO₂-Primärteilchen vor. Die mittlere Teilchengröße der SiO₂-Primärteilchen liegt bei etwa 50 nm. Das Agglomerat der SiO₂-Primärteilchen ist lose, so dass es durch leichten mechanischen Druck zerrieben und zerkleinert werden kann. Zwischen den SiO₂-Primärteilchen sind offene Porenkanäle ausgebildet. Die spezifische Oberfläche (nach BET) des Sprühgranulats beträgt 30 m²/g und die Schüttdichte liegt bei 0,8 kg/l.

### Herstellung von Frostgranulat

In einer frostsicheren, verschließbaren PTFE-Flasche wird ein SiO2-Schlicker hergestellt, indem das hochreine, pyrogene erzeugte SiO2-Sootmaterial in deionisiertem Wasser dispergiert wird. Der Feststoffgehalt des Schlickers liegt bei 12 Gew.-%. Zur Homogenisierung wird der SiO2-Schlicker mehrere Stunden gerührt. Die PTFE-Flasche wird anschließend in einem Gefrierschrank über Nacht bei -18°C tiefgefroren.

Beim Auftauen trennen sich die agglomerierten SiO₂-Teilchen als Bodensatz vom Wasser, so dass in der unteren Hälfte des Behälters der Bodensatz ansteht und darüber das Wasser als mehr oder weniger klare Flüssigkeit. Die Flüssigkeit wird abgegossen. Aus dem feuchten Bodensatz aus agglomerierten SiO₂-Teilchen wird das verbliebene Restwasser mittels einer Zentrifuge entfernt. Bei einer Drehzahl von 5000 U/min wird nach etwa 5 Minuten ein SiO₂-Granulat erhalten, das im Trockenschrank bei einer Temperatur von 200 °C nachgetrocknet wird.

Der Feinanteil mit einem Durchmesser unterhalb von 100 µm wird abgesiebt. Dabei wird ein Frostgranulat mit einem mittleren Korndurchmesser von 216 µm erhalten. Die spezifische Oberfläche (nach BET) beträgt 30 m²/g und die Schüttdichte liegt bei 0,54 kg/l.

### Reinigen und Sintern des Sprühgranulats

Das SiO₂-Sprühgranulat wird anschließend in einem Durchlaufofen in einem HCl/Cl₂-Gasgemisch gereinigt und dabei thermisch vorverdichtet. In einer Versuchsreihe wurden die Maximaltemperatur und der Durchsatz (und damit die mittlere Verweilzeit im Drehrohrofen) variiert, wie in der zweiten Spalte von Tabelle 1 angegeben. Dabei bedeutet "mittlerer Durchsatz" etwa 15 kg/h. Die damit einhergehende mittlere Verweilzeit beträgt etwa 30 Minuten. Niedriger Durchsatz und hoher Durchsatz liegen um 5 kg/h niedriger beziehungsweise höher. Bei den im Drehrohrofen behandelten Proben ist der "letzte Heißbehandlungsschritt" (2.Spalte von Tabelle) als "dynamisch" gekennzeichnet.

Bei einigen Proben der Versuchsreihe wurden die Granulate nicht im Drehrohrofen gereinigt und gesintert, sondern in einem Grafittiegel mit einem entsprechenden HCl/Cl₂-Gasgemisch. Die Verweildauer beträgt hierbei jeweils 4 Stunden. Bei den so verdichteten Proben ist der "letzte Heißbehandlungsschritt" in Tabelle 1 als "statisch" bezeichnet.

Nach dieser Reinigungs- und Sinterbehandlung sind die Granulatteilchen thermisch verdichtet. Die einzelnen SiO₂-Primärteilchen sind durch sogenannte "Halsbildung" relativ fest miteinander verwachsen. Die vor dem Sintern vorhandenen Porenkanäle haben sich verengt, können aber je nach Intensität der thermischen Einwirkung (Sintertemperatur und Sinterdauer) noch durchgängig und mindestens teilweise offen sein. Der entsprechende Porositätsgrad ist in Spalte 5 von Tabelle 1 als "offen" oder als "teilweise offen" bezeichnet. Im Übergangsbereich, in dem ein Teil der vorher offenen Porenkanäle geschlossen ist und ein anderer Teil noch offen ist, zeigt das SiO₂-Granulat bei Verglasen zu Quarzglas nicht mehr optimale Eigenschaften. Sind die Porenkanäle zumindest oberflächlich geschlossen, so ist dies in Spalte 5 als "geschlossen" vermerkt. Das entsprechende Beispiel der Probe G ist ein Vergleichsbeispiel. Die Porosität der Granulatteilchen ist in diesen Fällen gering und es besteht die Gefahr, dass Gase der Drehrohrofen-Atmosphäre eingeschlossen sind so, dass beim Einschmelzen ein blasenreiches Quarzglas erzeugt wird. Als Maß dafür wird das Verhältnis T₅₀₀/T₁₇₀₀ herangezogen, das in diesem Fall größer als 0,8 ist.

Jedes verdichtete Granulat wird anhand seiner Teilchengrößenverteilung charakterisiert. Wegen erleichterter Einschmelzbarkeit ist eine enge Teilchengrößenverteilung erwünscht. Angestrebt wird eine Teilchengrößenverteilung, bei der die dem D₉₀-Wert zugeordnete Teilchengröße maximal dreifach so groß ist wie die dem D₁₀-Wert zugeordnete Teilchengröße. Soweit erforderlich wird hierzu vor dem Einschmelzen ein etwaiger Feinanteil des Granulats oder ein Anteil grober Granulatteilchen, die sich beispielsweise aufgrund von Agglomeration beim Reinigen und Sintern gebildet haben können, entfernt. Die Teilchengrößenverteilung von Probe E (Tabelle 1) ist beispielsweise durch folgende Kennzahlen charakterisiert:

| | |
|---|---|
| D10: | 130 µm |
| D50: | 230 µm |
| D90: | 380 µm |

Für jedes Granulat wurden außerdem die spezifische BET-Oberfläche, die Porosität, die Schüttdichte und die Reinheit bestimmt. Der Gesamtgehalt der Verunreinigungen an Li, Na, K, Mg, Ca, Fe, Cu, Cr, Mn, Ti und Zr beträgt jeweils weniger als 200 Gew.-ppb. Die übrigen Messergebnisse sind ebenfalls in Tabelle 1 angegeben.

### Dichtsintern von Sprühgranulat zur Herstellung einer Referenzprobe

Zur Herstellung dichter, transparenter Quarzglaskörnung wird eine Charge des SiO₂-Sprühgranulats in einen evakuierbaren Tiegel eingebracht und unter Vakuum (Restdruck < 2 mbar) während einer Haltedauer von vier Stunden lang auf eine Temperatur von 1450 °C erhitzt.

Die vollständig verglasten SiO₂-Teilchen sind transparent und haben keine oder wenige, kleine Blasen. Ihre BET-Oberfläche liegt bei null. Die mittlere Teilchengröße beträgt 166 µm und die Schüttdichte 1,20 kg/l. Diese Quarzglaskörnung wird als "Referenzprobe" für IR-Transmissionsmessungen verwendet.

### Einschmelzen der Granulate zu Quarzglas

Die Granulate sowie die Quarzglaskörnung wurden zu Quarzglas eingeschmolzen. Das Einschmelzen erfolgte unter jeweils gleichen Bedingungen durch Einbringen einer Charge von 1 kg des Granulats in einen evakuierbaren Schmelztiegel aus Grafit, Hochheizen des Schmelztiegels auf eine Endtemperatur von 1700 °C unter Vakuum (Restdruck < 2 mbar) und Halten bei dieser Temperatur während einer Haltedauer von 200 Minuten. Nach Ablauf der halben Haltedauer wird die erweichte Quarzglasmasse einem mechanischen, uniaxialen Druck von 15 bar unterzogen. Die abgekühlten Quarzglaskörper werden visuell auf Blasen untersucht und bewertet.

Grundsätzlich könnte vielleicht jedes der SiO₂-Granulate zu einem blasenfreien, transparenten Quarzglaskörper eingeschmolzen werden, wenn nur die Heizintensität (Temperatur und Haltedauer) ausreichend hoch gewählt würde. Der vorliegende Einschmelzprozess ist aber so konzipiert, dass die Heizintensität für vollverglastes Granulat (Quarzglaskörnung) gerade ausreicht, um als Endprodukt einen blasenfreien, transparenten Quarzglaskörper zu erhalten.

Ob und inwieweit dieser hinsichtlich der aufgewandten Heizenergie knapp bemessene Einschmelzprozess auch für weniger verdichtete SiO₂-Granulate (nämlich die Proben A bis G und das nicht zusätzlich thermisch verdichtete Sprühbeziehungsweise Frostgranulat) zu hochqualitativem Quarzglas führt, ist in der letzten Spalte von Tabelle 1 angegeben. Dort ist repräsentativ für die Qualität des Quarzglases der sogenannte TBCS-Wert als Maß für die Blasigkeit des jeweilig erhaltenen Quarzglaskörpers aufgeführt. Der TBCS-Wert bezeichnet die Summe der Querschnittsflächen (in mm²) aller Blasen innerhalb eines Probenvolumens von 100 cm³. Der Wert wird durch visuelles Erfassen der Blasen und Addieren der Blasenquerschnitte ermittelt, wobei Blasen mit Durchmessern von weniger als 0,08 mm nicht erfasst werden.

**Figur 2** zeigt die Infrarot-Transmissionsspektren der Granulate, beziehungsweise des SiO₂-Soots und der vollständig verglasten Quarzglaskörnung als Referenzprobe über den Wellenlängenbereich von 500 bis 2500 nm. Die Messung der IR-Transmission erfolgte unter Einsatz einer Ulbrichtkugel (Firma Perkin-Elmer, Lambda 900) an einer jeweils 4,2 mm dicken Schüttung des SiO₂-Granulats in einer Messküvette aus Quarzglas, normiert auf eine Leerprobe (Küvette ohne Füllung = Leerintensität I₀). Der Abstand der Messküvette vom Eintritt der Ulbrichtkugel beträgt 4 mm. Die Öffnung der Ulbrichtkugel hat einen Durchmesser von 23 mm und ihr Durchmesser beträgt 60 mm. Der Messstrahl hat einen Querschnitt von etwa 10x10 mm. Aus der gemessenen Intensität I durch Messung der diffusen und gerichteten Transmission der Probe in der Ulbrichtkugel ergibt sich die gemessene Transmission T(gemessen) = I/I₀).

Die SiO₂-Granulate unterscheiden sich in ihrer Dichte, also ihrer Massenbelegung pro Volumeneinheit. Ein Maß für die unterschiedliche Massenbelegung ist die Schüttdichte. Um die Transmissionsmesswerte trotz unterschiedlicher Massenbelegung über der Messlänge vergleichbar zu machen, sind die Transmissionswerte daher auf die Schüttdichte des jeweiligen Granulats normiert. Das heißt, sie sind mit der in Spalte 5 von Tabelle 1 genannten spezifischen Schüttdichte des Granulats multipliziert. Die auf der Ordinate aufgetragenen Transmissionswerte T werden daher ermittelt als T (gemessen) x Schüttdichte, als: T = Messintensität I / Leerintensität I₀ x Schüttdichte. Sie haben die Einheit [%·g/cm³] und sie gelten für eine Messlänge von 4,2 mm.

Daraus ist erkennbar, dass die zur Charakterisierung der Erfindung insbesondere herangezogenen Wellenlängen 500 nm und 1700 nm von Absorptionsbanden, die durch Wasser und OH-Gruppen verursacht sind, kaum beeinflusst werden. Grundsätzlich nimmt die Transmission mit zunehmender Verdichtung (in der Reihenfolge der Proben Soot, Frostgranulat, Sprühgranulat, thermisch verdichtete Proben A bis G) zu. Die maximale Transmission der Probe G liegt sogar etwas höher als die maximale Transmission der Referenzprobe aus Quarzglaskörnung. Die materialspezifische Transmission T₁₇₀₀ bei der Wellenlänge von 1700 nm kann als Maßstab für den Grad der Verdichtung des jeweiligen Granulates dienen.

Weiterhin ist erkennbar, dass die noch vollständig oder zumindest weitgehend offenporigen SiO₂-Granulate der Proben A bis E im Wellenlängenbereich zwischen 500 und 1300 nm einen markanten Anstieg der Transmission zeigen. Bei den besonders hoch verdichteten Proben F und G (sowie bei der Referenzprobe) ist dieser Anstieg gering oder überhaupt nicht vorhanden. Der Übergang zwischen den Proben E (teilweise geschlossene Porosität) und Probe F (ebenfalls noch teilweise geschlossene Porosität) ist besonders markant. Die Porosität beider Proben ist als "teilweise geschlossen" charakterisiert. Offensichtlich machen sich bereits kleine Unterschiede in der Porosität in der Steigung des Transmissionsverlaufs im Wellenlängenbereich von 500 bis 1300 nm deutlich bemerkbar. Auch dieser Anstieg ist somit ein Maß für die Porosität oder optische Streuwirkung des jeweiligen Granulats. Er wird charakterisiert durch den Unterschied der bei den Wellenlängen 500 nm und 1700 nm gemessenen materialspezifischen Infrarot-Transmissionswerte T₅₀₀ beziehungsweise T₁₇₀₀. Spalte 8 von Tabelle 1 zeigt, dass bei Probe E dieses materialspezifische Transmissionsverhältnis noch 0,24 beträgt, wohingegen es bei Probe F sprungartig auf 0,8 gestiegen ist, was als Grenzwert der "offenen Porosität" der verdichteten Granulatteilchen gewertet wird.. Bei der Vergleichsprobe G beträgt das Verhältnis bereits 0,97.

Gemäß der letzten Spalte von Tabelle 1 wird das Quarzglas mit der geringsten Blasigkeit (gemessen als TBCS-Wert) unter Einsatz der vollständig verglasten Quarzglaskörnung erreicht. Dieses Ergebnis war an und für sich zu erwarten. Eine vergleichbar gute Quarzglasqualität in Bezug auf Blasigkeit wird aber auch bei Einsatz der beiden Granulate von Probe D und insbesondere von Probe E erreicht. Die Granulate der Proben D und E haben jedoch eine geringe Vorverdichtung, wie sich sowohl im Transmissionswert T₁₇₀₀ von 85 % beziehungsweise 93,7% sowie im geringen Wert für das Verhältnis T₅₀₀/T₁₇₀₀, nämlich von 0,2 beziehungsweise 0,24 zeigt. Diese Granulate ergeben somit bei gleichen Einschmelzbedingungen eine Quarzglasqualität mit ähnlichen TBCS-Werten wie die vollständig verglaste Quarzglaskörnung. Die Herstellung des Quarzglases aus den nur vorverdichteten Granulaten erfordert aber einen vergleichsweise geringeren Energie- und Zeitaufwand. Denn das Dichtsintern des Sprühgranulats ist in dieser Hinsicht aufwändiger als die Herstellung der nur teilweise verdichteten Granulate.

Allerdings zeigt die gegenüber Probe E nur geringfügig stärker verdichtete Probe F eine etwas höhere und die Probe G sogar eine merklich höhere Blasigkeit (gemessen als TBCS-Wert). Bei Probe F liegt die mittlere Verdichtung, repräsentiert durch T₁₇₀₀ zwar auch bei 93,8% (und damit ähnlich hoch wie bei Probe E). Allerdings beträgt das Verhältnis T₅₀₀/T₁₇₀₀ = 0,8 und liegt damit deutlich höher als bei Probe E. Der aus dem Granulat von Probe E erzeugte Quarzglaskörper erweist sich in Bezug auf den Blasengehalt als besser als der von Probe F und deutlich besser als der von Probe G.

Das Beispiel der Probe F ist ein Vergleichsbeispiel. Das Granulat der sehr stark verdichteten Probe G ergibt jedoch einen Quarzglaskörper mit einem eher ungünstigen Transmissions- und Emissionsverhalten im Infraroten Wellenlängenbereich - repräsentiert durch einen hohen Wert des materialspezifischen Transmissionsverhältnisses T₅₀₀/T₁₇₀₀ von 0,97, der darüber hinaus überraschend viele und/oder große Blasen - repräsentiert durch den TBCS-Wert von 2. Letzteres kann darauf zurückgeführt werden, dass beim Einschmelzprozess in den Granulatteilchen eingeschlossene Gase infolge der Erhitzung expandierten aber nicht mehr entweichen konnten.

Auch das gering verdichtete Granulat der Probe A ergibt ein blasenhaltiges Quarzglas. Die vorhandenen Blasen sind jedoch klein, so dass das Quarzglas für Anwendungen mit geringen Anforderungen an die Blasenfreiheit noch akzeptabel ist.

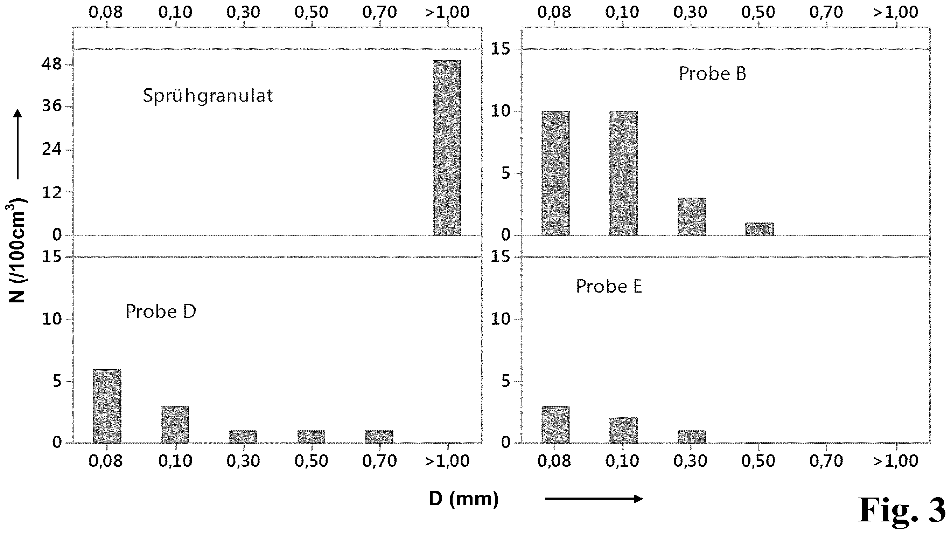

In den Histogrammen von **Figur 3** ist auf der Ordinate jeweils die Blasenanzahl N (pro 100 cm³ Probenvolumen) gegen den Blasendurchmesser d (in mm) im Bereich von 0,08 mm bis 1 mm (und größer) aufgetragen.

Demnach zeigt das Sprühgranulat (Histogramm oben links) ausschließlich Blasen mit Durchmessern von 1 mm und mehr; die Blasenanzahl liegt bei etwa 50. Diese Blasenanzahl ist bei der nur mäßig thermisch verdichteten Probe B (siehe Tabelle 1; Histogramm oben rechts) etwa halbiert; insbesondere ist jedoch die Blasengröße deutlich reduziert. Die meisten Blasen haben nur noch Blasendurchmesser im Bereich der Detektionsgrenze (0,08 mm).

Dieser Verdichtungseffekt macht sich auch bei Blasenanzahl und - durchmesser der stärker verdichteten Proben D und E (untere Histogramme) bemerkbar.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### 1. Synthese von SiO₂

**"**Synthetisches Quarzglas" besteht aus undotiertem oder dotiertem Siliziumdioxid, das vorzugsweise durch Hydrolyse oder Oxidation eines siliziumhaltigen Ausgangsmaterials erzeugt worden ist. Als Ausgangsmaterialien kommen halogenierte Siliziumverbindungen, wie etwa SiCl₄, SiHCl₃ und Alkoxyde (Tetramethoxydsilan, TMOS, Methyltrimethoxysilan, MTMS) oder Siloxane (wie etwa Polyalkylsiloxane, beispielswiese Octame-thylzyklotetrasiloxan OMCTS) oder Mischungen der genannten Ausgangsmaterialien in Frage.

Durch Hydrolyse oder Oxidation werden "SiO₂-Primärteilchen" im nanoskaligen Bereich mit einem SiO₂-Gehalt von mehr als 99,99 % und wenig Verunreinigungen enthalten. In ihrer Gesamtheit bilden diese ein feinteiliges "SiO₂-Pulver", das auch als "Sootstaub", "Soot" oder "Ruß" bezeichnet wird.

SiO₂-Pulver ist hochrein in dem Sinne, dass die Hauptkomponente SiO₂ ist und nur geringe Mengen an anderen Elementen im ppm- oder ppb-Bereich enthalten sind. Verunreinigungen in dem SiO₂-Pulver oder in dem daraus hergestellten Quarzglas werden mittels ICP-OES oder ICP-MS-Methoden ermittelt, wobei die Konzentration in Gewichts-Anteilen angegeben wird.

Die "spezifische Oberfläche (BET)" wird nach der Methode von Brunauer, Emmet und Teller (BET) anhand der DIN 66132 ermittelt und basiert auf Gasabsorption an der zu messenden Oberfläche.

Eine besonders interessante Gruppe chlorfreier Einsatzmaterialien bilden die "Polyalkylsiloxane" (auch kurz als "Siloxane" bezeichnet). Die Stoffgruppe der Siloxane lässt sich unterteilen in offenkettige und in geschlossenkettige Polyalkylsiloxane. Die Polyalkylsiloxane haben die allgemeine Summenformel SiₚOₚ(R)_{2P}, wobei P eine ganze Zahl ≥ 2 ist. Der Rest "R" ist eine Alkylgruppe, im einfachsten Fall eine Methylgruppe. Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt. Das Polyalkylsiloxan-Einsatzmaterial enthält jedoch vorzugsweise drei unterschiedliche Polyalkylsiloxane, ausgewählt aus der Gruppe: Hexamethylcyclotrisiloxan (D3), Octamethylcyclotetrasiloxan (D4), Dekamethylcyclopentasiloxan (D5) und Dodekamethylcyclohexasiloxan (D6). Die Abkürzungen D3, D4, D5 basieren auf einer von General Electric Inc. eingeführten Notation, wobei D auch als "D4" bezeichnet, wobei "D" die Gruppe [(CH₃)₂Si]-0- repräsentiert. In einer bevorzugten Variante ist D4 die Hauptkomponente des Polyalkylsiloxan-Einsatzmaterials. Dementsprechend beträgt der Anteil von D4 mindestens 70 Gew.-%, insbesondere mindestens 80 Gew.-%, vorzugsweise mindestens 90 Gew.-% und besonders bevorzugt mindestens 94 Gew.-%.

### 2. Herstellung eines SiO₂-Schlickers

Der Begriff "Schlicker" wird für eine Suspension aus einer Flüssigkeit und dem SiO₂-Pulver verwendet. Als Flüssigkeit kann Wasser eingesetzt werden, das durch Destillation oder Deionisierung gereinigt ist, um den Gehalt an Verunreinigungen zu minimieren. Das SiO₂-Pulver ist in Wasser bei Raumtemperatur nahezu unlöslich, kann jedoch in Wasser in hohen Gewichts-Anteilen eingebracht werden.

Die "Partikelgröße in der Suspension" bezeichnet die Partikelgrößenverteilung der in einer Suspension enthaltenen Feststoffpartikel. Sie wird durch dynamische Lichtstreuung gemessen (Dynamic Light Scattering DLS). Das Streuverhalten von Laserlicht hängt von der Partikelgröße ab und variiert zeitlich in Folge der Braunschen Bewegung der Partikel. Aus der Analyse von Intensitätsfluktuationen ergeben sich die Diffusionskoeffizienten der Partikel. Die Partikelgröße kann wiederum von den Diffusionskoeffizienten mittels der Stokes-Einstein-Gleichung berechnet werden.

### 3. Granulation

Man kann zwischen Aufbaugranulation und Pressgranulation und verfahrenstechnisch zwischen Nass- und Trocken-Granulierverfahren unterscheiden. Bekannte Methoden sind Rollgranulation in einem Granulierteller, Sprühgranulation, Zentrifugalzerstäubung, Wirbelschichtgranulation, Granulierverfahren unter Einsatz einer Granuliermühle, Kompaktierung, Walzenpressen, Brikettierung, Schülpenherstellung oder Extrudierung.

Beim Granulieren bilden sich durch Zusammenlagerungen der SiO₂-Primärteilchen diskrete, größere Agglomerate, die hier als "SiO₂-Granulatteilchen" oder kurz "Granulatteilchen" bezeichnet werden. In ihrer Gesamtheit bilden die Granulatteilchen ein "SiO₂-Granulat".

Die "Sprühgranulation" gehört zur Gruppe der Nass-Granulierverfahren. Während der Sprühgranulation bilden sich feine Tropfen des Schlickers die anschließend und/gleichzeitig mittels eines heißen Gasstroms zu einem "Sprühgranulat" getrocknet werden. Die Sprühgranulat-Teilchen können in unterschiedlicher Größe im Bereich von einigen Mikrometern bis zu einigen Millimetern Durchmesser hergestellt werden.

Die "Partikelgröße der Sprühgranulate" bezeichnet die makroskopische Abmessung eines jeden festen Granulat-Teilchens und wird als Partikelgrößenverteilung, üblicherweise mittels Siebmethoden oder durch Laserstreumethoden, ermittelt. Bei der Siebanalyse wird das Pulver mittels Siebböden mit unterschiedlichen Siebgrößen separiert. Diese Methode ist besonders einfach und wird daher bevorzugt. Der Gewichtsanteil des Siebgutes innerhalb eines durch zwei Siebgrößen definierten Größenbereichs wird gegen die Partikelgröße aufgetragen, so dass die Partikelgrößenverteilung erhalten wird. Typische Größenangaben sind D₁₀, D₅₀ und D₉₀, wobei die Ziffern den Gewichtsanteil des Siebgutes in Prozent bezeichnen, der kleiner als die entsprechende Wertangabe ist.

Der Begriff "Schüttdichte" (engl.: bulk density, auch als "Schüttgewicht" bezeichnet) von Granulat oder Pulvers wird in Masse pro Volumeneinheit angegeben. Die Schüttdichte ist definiert als die Masse vieler Materialpartikel bezogen auf das von ihnen belegte Gesamtvolumen. Sie wird gemessen, indem ein Behälter mit bekannten Volumen aufgefüllt und gewogen wird. Die Schüttdichte von in Pulver- oder Granulatform vorliegenden Substanzen wird nach der Internationalen Norm ISO 697 (frühere Ausgabe: DIN 53912) bestimmt. Der Begriff "Stampfdichte" (engl.: tapped density) bezeichnet die Dichte, die nach mechanischer Verdichtung des Pulvers oder des Granulats beispielsweise mittels Vibration des Behälters erzeugt wird. Sie wird nach DIN/ISO 787 Teil 11 ermittelt.

Das "Porenvolumen" eines porösen Materials bezeichnet das von Hohlräumen belegte, freie Volumen innerhalb des Materials. Das Porenvolumen wird beispielsweise mittels eines Porosimeters gemessen, wobei eine nicht benetzende Flüssigkeit (wie beispielsweise Quecksilber) unter Einwirkung eines äußeren Druckes in die Poren eines porösen Materials gegen die entgegenwirkenden Oberflächenspannungskräfte gepresst wird. Die dazu benötigte Kraft ist umgekehrt proportional zur Porengröße und daher kann neben dem Porengesamtvolumen auch die Porengrößenverteilung der Probe ermittelt werden. Die Quecksilberporosimetrie erfasst nur Porengrößen oberhalb von 2 nm (Mesoporen und Makroporen).

"Mikroporen" sind Poren mit Porengrößen von weniger als 2 nm. Deren Beitrag zur Porosität und zur spezifischen Oberfläche wird mittels der V-t-Methode mittels Stickstoffabsorption ermittelt, wobei eine Probe bei unterschiedlich geringen Drücken und 77 K gehalten wird. Die Methode gleicht der BET-Methode, wobei der Druckbereich zu höheren Drücken ausgedehnt ist, so dass auch Oberflächen des nicht mikro-porösen Teils des Materials erfasst werden.

### 4. Reinigung des Granulats

Bei der "Reinigung" wird der Gehalt an Verunreinigungen im Granulat verringert. Die Hauptverunreinigungen sind Restwasser (OH-Gruppen), kohlenstoffhaltige Verbindungen, Übergangsmetalle, Alkalimetalle und Erdalkalimetalle, die aus dem Ausgangsmaterial stammen oder durch die Prozessierung eingetragen werden. Bereits durch Einsatz reiner Ausgangsmaterialien und durch entsprechendes Equipment und Prozessierung unter Reinraumbedingungen kann ein geringer Verunreinigungsgehalt erreicht werden. Um noch höhere Anforderungen an die Reinheit zu erfüllen, kann das Granulat in einem Drehrohrofen bei hoher Temperatur (< 900°C) unter chlorhaltiger und sauerstoffhaltiger Atmosphäre behandelt werden. Dabei dampft restliches Wasser ab, organische Materialien reagieren zu CO und CO₂ und viele Metalle (wie beispielsweise Eisen und Kupfer) können zu flüchtigen, chlorhaltigen Verbindungen konvertiert werden.

Nach dieser Behandlung zeigt das Sprühgranulat einen Verunreinigungsgehalt von weniger als 1 ppm für jeden der genannten metallischen Verunreinigungen.

### 5. Sintern / Verdichten und Verglasen

Mit "Sintern" oder "Verdichten" wird hier ein Verfahrensschritt bezeichnet, bei dem ein SiO₂-Granulat bei erhöhter Temperatur von mehr als 1100 °C entweder in einem dynamischem Ofen (beispielsweise in einem Drehrohrofen) oder in einem statischen Ofen behandelt wird. Dabei verringert sich die spezifische Oberfläche (BET), wohingegen die Schüttdichte und die mittlere Partikelgröße aufgrund von Agglomerationen von Granulatteilchen zunehmen können.

Während des "Verglasens" wird das vorverdichtete, gesinterte SiO₂-Granulat unter Bildung eines Quarzglaskörpers verglast. Das Granulat wird dabei in eine Schmelzform gefüllt, die beispielsweise aus Graphit besteht oder mit Graphitfolie ausgeschlagen ist. Danach wird die Schmelzform in einem elektrischen Ofen auf eine Temperatur von ungefähr 1700 °C oder mehr aufgeheizt. Das Aufheizen erfolgt unter "Vakuum". Unter Vakuum wird ein absoluter Gasdruck von weniger als 2 mbar verstanden. Das erweichte Quarzglas kann einem statischen Druck (5 bis 20 bar) unterzogen werden. Nach dem Abkühlen auf Raumtemperatur wird ein verglaster, möglichst blasenfreier Quarzglaskörper erhalten der beispielsweise für optische oder Halbleiter-Anwendungen geeignet ist.

**"**Blasenfrei" bedeutet dabei, dass die Gesamtquerschnittsfläche aller Blasen innerhalb einer Probe bezogen auf ein spezifisches Volumen von 100 cm³ maximal 0,5 beträgt (TBCS-Wert; engl.: Total Bubble Cross Section). Der Gesamtquerschnitt aller Blasen wird in Quadratmillimeter angegeben, wobei Blasen mit einem Durchmesser von weniger als 0,08 mm nicht mitgezählt werden.

## Patentansprüche

1. Verfahren für die Herstellung von Bauteilen aus synthetischem Quarzglas, umfassend folgende Verfahrensschritte:
(a) Synthese amorpher SiO₂-Primärteilchen,
(b) Granulieren der amorphen SiO₂-Primärteilchen unter Bildung eines offenporigen SiO₂-Granulats,
(c) Sintern des offenporigen SiO₂-Granulats durch Erhitzen in einer Sinter-Atmosphäre bei einer Sinter-Temperatur und während einer Sinter-Dauer unter Bildung eines verdichteten SiO₂-Granulats,
(d) Schmelzen des verdichteten SiO₂-Granulats bei einer Schmelz-Temperatur unter Bildung des Bauteils aus dem synthetischen Quarzglases,
**dadurch gekennzeichnet, dass** zur Herstellung von Bauteilen aus transparentem Quarzglas Sinter-Atmosphäre, Sinter-Temperatur und Sinter-Dauer beim Sintern gemäß Verfahrensschritt (c) so eingestellt werden, dass das verdichtete SiO₂-Granulat eine Schüttdichte im Bereich von 0,9 kg/l bis 1,3 kg/l und eine spezifische BET-Oberfläche im Bereich von 1 m²/g bis 25 m²/g aufweist - beides jeweils gemessen anhand einer in der Beschreibung definierten Messmethode -, und dass es einerseits offenporig bleibt und andererseits bei einer Wellenlänge von 1700 nm eine materialspezifische Infrarot-Transmission T₁₇₀₀ - gemessen anhand einer in der Beschreibung definierten Messmethode - zeigt, die im Bereich von 50 bis 95% der Infrarot-Transmission T₁₇₀₀ einer Quarzglaskörnung desselben Materials liegt.

2. Verfahren nach Anspruch 1, **dadurch gekennzeichnet, dass** die Infrarot-Transmission T₁₇₀₀ im Bereich von 60 bis 90% der Infrarot-Transmission T₁₇₀₀ einer Quarzglaskörnung desselben Materials liegt.

3. Verfahren nach Anspruch 1 oder 2, **dadurch gekennzeichnet, dass** Sinter-Atmosphäre, Sinter-Temperatur und Sinter-Dauer beim Sintern gemäß Verfahrensschritt (c) so eingestellt werden, dass das verdichtete SiO₂-Granulat bei einer Wellenlänge von 500 nm eine materialspezifische Infrarot-Transmission T₅₀₀ zeigt, und dass das Verhältnis T₅₀₀/T₁₇₀₀ 0,8 oder weniger beträgt.

4. Verfahren nach einem der vorhergehenden Ansprüche, **dadurch gekennzeichnet, dass** das Schmelzen gemäß Verfahrensschritt (d) ein Erhitzen einer Schüttung des SiO₂-Granulats oder eines Presslings aus dem SiO₂-Granulat unter Unterdruck bei der Schmelz-Temperatur umfasst.

5. Verfahren nach einem der vorhergehenden Ansprüche, **dadurch gekennzeichnet, dass** das verdichtete SiO₂-Granulat eine Schüttdichte von mindestens 1,1 kg/l aufweist.

6. Verfahren nach einem der vorhergehenden Ansprüche, **dadurch gekennzeichnet, dass** das verdichtete SiO₂-Granulat eine spezifische BET-Oberfläche im Bereich von 3 m²/g bis 20 m²/g aufweist.

7. Verfahren nach einem der vorhergehenden Ansprüche, **dadurch gekennzeichnet, dass** die Sinter-Atmosphäre chlorhaltig ist, und dass die Sinter-Temperatur mindestens 1000 °C, vorzugsweise mindestens 1100 °C beträgt.

8. Verfahren nach einem der vorhergehenden Ansprüche, **dadurch gekennzeichnet, dass** das Sintern gemäß Verfahrensschritt (c) in einem Drehrohrofen erfolgt.

9. Verfahren nach einem der vorhergehenden Ansprüche, **dadurch gekennzeichnet, dass** das Granulieren gemäß Verfahrensschritt (b) durch Sprühgranulation erfolgt und Granulatteilchen mit sphärischer Morphologie erzeugt werden.

10. Verfahren nach einem der Ansprüche 1 bis 8, **dadurch gekennzeichnet, dass** das Granulieren gemäß Verfahrensschritt (b) durch Frostgranulation erfolgt und Granulatteilchen mit plättchenförmiger Morphologie erzeugt werden.

11. Verfahren nach einem der vorhergehenden Ansprüche, **dadurch gekennzeichnet, dass** beim Granulieren gemäß Verfahrensschritt (b) offenporiges SiO₂-Granulat aus Granulatteilchen erzeugt wird, die einen mittlere Teilchengröße von mindestens 150 µm, bevorzugt mindestens 200 µm aufweisen, und dass das erhaltene offenporige SiO₂-Granulat eine BET-Oberfläche im Bereich von 20 m²/g bis 100 m²/g aufweist.

12. Verfahren nacheinem der vorhergehenden Ansprüche, **dadurch gekennzeichnet, dass** die Granulatteilchen des verdichteten Granulats eine enge Teilchengrößenverteilung aufweisen, wobei die dem D₉₀-Wert zugeordnete Teilchengröße maximal dreifach so groß ist wie die dem D₁₀-Wert zugeordnete Teilchengröße.

13. Verfahren nach einem der vorhergehenden Ansprüche, **dadurch gekennzeichnet, dass** beim Granulieren gemäß Verfahrensschritt (b) pyrogen erzeugte SiO₂-Primärteilchen eingesetzt werden, wobei die SiO₂-Primärteilchen bevorzugt durch Oxidation oder Flammenhydrolyse eines chlorfreien siliziumhaltigen Einsatzmaterials erzeugt werden.

## Claims

1. A method for producing components of synthetic quartz glass, comprising the following method steps:
(a) synthesizing amorphous SiO₂ primary particles,
(b) granulating the amorphous SiO₂ primary particles to form an open-pore SiO₂ granulate,
(c) sintering the open-pore SiO₂ granulate by heating in a sintering atmosphere at a sintering temperature and for a sintering period to form a densified SiO₂ granulate, and
(d) melting the densified SiO₂ granulate at a melting temperature to form the component of the synthetic quartz glass;
**characterized in that** for the production of components of transparent quartz glass, the sintering atmosphere, the sintering temperature, and the sintering duration are adjusted during sintering in step (c) such that the densified SiO₂ granulate has a bulk density in a range of 0.9 kg/l to 1.3 kg/l and a specific BET surface area in a range of 1 m²/g to 25 m²/g, and that it still comprises open pores on the one hand and manifests, on the other hand a material-specific infrared transmission T₁₇₀₀ at a wavelength of 1700 nm - measured according to a measurement method defined in the description -, wherein the transmission is in a range of 50-95% of the infrared transmission T₁₇₀₀ of quartz glass granules of the same material.

2. The method according to claim 1, **characterized in that** the infrared transmission T₁₇₀₀ is in a range of 60-90% of the infrared transmission T₁₇₀₀ of quartz glass granules of the same material.

3. The method according to claim 1 or 2, **characterized in that** sintering atmosphere, the sintering temperature, and the sintering duration are adjusted during sintering in step (c) such that the densified SiO₂ granulate manifests a material-specific infrared transmission T₅₀₀ at a wavelength of 500 nm, and wherein a ratio T₅₀₀/T₁₇₀₀ is 0.8 or less.

4. The method according to any one of the preceding claims, **characterized in that** melting in step (d) comprises heating a bulk material of SiO₂ granulate or a compact comprising the SiO₂ granulate under negative pressure at the melting temperature.

5. The method according to any one of the preceding claims, **characterized in that** the densified SiO₂ granulate has a bulk density of at least 1.1 kg/l.

6. The method according to any one of the preceding claims, **characterized in that** the densified SiO₂ granulate has a specific BET surface area in a range of 3 m²/g to 20 m²/g.

7. The method according to any one of the preceding claims, **characterized in that** the sintering atmosphere contains chlorine and the sintering temperature is at least 1000°C, preferably at least 1100°C.

8. The method according to any one of the preceding claims, **characterized in that** sintering in step (c) is performed in a rotary furnace.

9. The method according to any one of the preceding claims, **characterized in that** granulation according to method step (b) is performed by way of spray granulation, and wherein granulate particles with a spherical morphology are obtained.

10. The method according to any one of claims 1 to 8, **characterized in that** granulation according to method step (b) is performed by freeze granulation, and wherein granulate particles with a platelet-shaped morphology are obtained.

11. The method according to any one of the preceding claims, **characterized in that** during granulating in step (b), open-pore SiO₂ granulate is produced from granulate particles having a mean particle size of at least 150 µm, preferably at least 200 µm, and wherein the open-pore SiO₂ granulate has a BET surface area in a range of 20 m²/g to 100 m²/g.

12. The method according to any one of the preceding claims, **characterized in that** the granulate particles of the densified granulate have a narrow particle size distribution, wherein the particle size assigned to a D₉₀ value is at the most three times as large as the particle size assigned to a D₁₀ value.

13. The method according to any one of the preceding claims, **characterized in that** during granulation according to method step (b), pyrogenically obtained SiO₂ primary particles are used, and wherein the SiO₂ primary particles are preferably obtained by oxidation or flame hydrolysis of a chlorine-free silicon-containing feedstock.

## Revendications

1. Procédé de fabrication de composants en verre de silice synthétique, comprenant les étapes de procédé suivantes :
(a) synthèse de particules primaires amorphes de SiO₂,
(b) granulation des particules primaires amorphes de SiO₂ avec formation d'un matériau granulaire de SiO₂ à pores ouverts,
(c) frittage du matériau granulaire de SiO₂ à pores ouverts par chauffage dans une atmosphère de frittage à une température de frittage et pendant une durée de frittage avec formation d'un matériau granulaire compacté de SiO₂,
(d) fusion du matériau granulaire compacté de SiO₂ à une température de fusion avec formation du composant en verre de silice synthétique,
**caractérisé en ce que**, pour la fabrication de composants en verre de silice transparent, l'atmosphère de frittage, la température de frittage et la durée de frittage lors du frittage selon l'étape de procédé (c) sont réglées de telle manière que le matériau granulaire compacté de SiO₂ présente une densité apparente comprise entre 0,9 kg/l et 1,3 kg/l et une surface spécifique selon BET comprise entre 1 m²/g et 25 m²/g, toutes deux mesurées selon une méthode de mesure définie dans la description, et **en ce qu'**il reste d'une part à pores ouverts et affiche d'autre part, à une longueur d'onde de 1700 nm, une transmission dans l'infrarouge T₁₇₀₀ spécifique du matériau, mesurée selon une méthode de mesure définie dans la description, qui est comprise entre 50 et 95 % de la transmission dans l'infrarouge T₁₇₀₀ de grains de verre de silice du même matériau.

2. Procédé selon la revendication 1, **caractérisé en ce que** la transmission dans l'infrarouge T₁₇₀₀ est comprise entre 60 et 90 % de la transmission dans l'infrarouge T₁₇₀₀ de grains de verre de silice du même matériau.

3. Procédé selon la revendication 1 ou 2, **caractérisé en ce que** l'atmosphère de frittage, la température de frittage et la durée de frittage lors du frittage selon l'étape de procédé (c) sont réglées de telle manière que le matériau granulaire compacté de SiO₂ affiche, à une longueur d'onde de 500 nm, une transmission dans l'infrarouge T₅₀₀ spécifique du matériau, et **en ce que** le rapport T₅₀₀/T₁₇₀₀ est de 0,8 ou moins.

4. Procédé selon l'une des revendications précédentes, **caractérisé en ce que** la fusion selon l'étape de procédé (d) comprend un chauffage d'un déversement du matériau granulaire de SiO₂ ou d'un comprimé constitué du matériau granulaire de SiO₂ sous pression subatmosphérique à la température de fusion.

5. Procédé selon l'une des revendications précédentes, **caractérisé en ce que** le matériau granulaire compacté de SiO₂ présente une densité apparente d'au moins 1,1 kg/l.

6. Procédé selon l'une des revendications précédentes, **caractérisé en ce que** le matériau granulaire compacté de SiO₂ présente une surface spécifique selon BET comprise entre 3 m²/g et 20 m²/g.

7. Procédé selon l'une des revendications précédentes, **caractérisé en ce que** l'atmosphère de frittage contient du chlore et **en ce que** la température de frittage est d'au moins 1000 °C, de préférence au moins 1100 °C.

8. Procédé selon l'une des revendications précédentes, **caractérisé en ce que** le frittage selon l'étape de procédé (c) est effectué dans un four tubulaire rotatif.

9. Procédé selon l'une des revendications précédentes, **caractérisé en ce que** la granulation selon l'étape de procédé (b) est effectuée par granulation par pulvérisation et des particules de matériau granulaire ayant une morphologie sphérique sont générées.

10. Procédé selon l'une des revendications 1 à 8, **caractérisé en ce que** la granulation selon l'étape de procédé (b) est effectuée par granulation par congélation et des particules de matériau granulaire ayant une morphologie en forme de paillettes sont générées.

11. Procédé selon l'une des revendications précédentes, **caractérisé en ce que**, lors de la granulation selon l'étape de procédé (b), du matériau granulaire de SiO₂ à pores ouverts est généré à partir de particules de matériau granulaire, qui présentent une taille de particule moyenne d'au moins 150 µm, de préférence au moins 200 µm, et **en ce que** le matériau granulaire de SiO₂ à pores ouverts obtenu présente une surface spécifique selon BET comprise entre 20 m²/g et 100 m²/g.

12. Procédé selon l'une des revendications précédentes, **caractérisé en ce que** les particules de matériau granulaire du matériau granulaire compacté présentent une répartition granulométrique étroite, la taille de particule associée à la valeur D₉₀ étant au maximum trois fois plus grande que la taille de particule associée à la valeur D₁₀.

13. Procédé selon l'une des revendications précédentes, **caractérisé en ce que**, lors de la granulation selon l'étape de procédé (b), des particules primaires de SiO₂ générée par pyrogénation sont utilisées, les particules primaires de SiO₂ étant générées de préférence par oxydation ou hydrolyse à la flamme d'une matière première sans chlore contenant du silicium.
